# FASCICULE DE BREVET EUROPEEN

(11) **EP 3 599 840 B1**
(45) Date de publication et mention de la délivrance du brevet: **09.08.2023**
(21) Numéro de dépôt: 18722106.4
(22) Date de dépôt: 29.03.2018
(51) Int. Cl.: A01K 15/02, A01K 1/03, A01K 63/00

(54) **SYSTÈME POUR TOXIMETRE A SEPARATIONS INCLINEES**
SYSTEM FÜR EIN TOXIMETER MIT GENEIGTEN SEPARATOREN
SYSTEM FOR A TOXIMETER, HAVING INCLINED SEPARATORS

(30) Priorité: 30.03.2017 FR 1752677
(43) Date de publication de la demande: 05.02.2020
(73) Titulaire: View Point, 01390 Civrieux (FR); Institut national de recherche pour l'agriculture, l'alimentation et l'environnement, 75007 Paris (FR)
(72) Inventeur: CHAUMOT, Arnaud, 69001 Lyon (FR); DAUPHIN, Maxime, 01430 Condamine (FR); DECAMPS, Alexandre, 34610 Saint-Gervais-Sur-Mare (FR); GEFFARD, Olivier, 17180 Perigny (FR); MOULIN, Florian, 69004 Lyon (FR); NEUZERET, Didier, 01600 Sainte Euphemie (FR)
(74) Mandataire: Regimbeau
(86) Numéro de dépôt international: PCT/FR2018/050784
(87) Numéro de publication internationale: WO 2018/178585

(56) Documents cités:
- FR-A1- 2 980 667
- KR-A- 20000 067 583

## Description

La présente invention se rapporte au domaine de l'éthologie ou étude comportementale d'organismes vivants, notamment de la toxicologie, et plus particulièrement au domaine de la surveillance d'êtres vivants dans un toximètre.

L'étude comportementale d'organismes vivants fait appel à des système d'étude comportementale d'organismes vivants. Par exemple, la demande de brevet FR2980667 décrit labyrinthe permettant l'étude des capacités neurologiques d'un rat de laboratoire, dans lequel des cases sont formée par des plaques dont certaines comportent des portes pour réaliser un chemin dans le labyrinthe. Un rat parcourt le labyrinthe en passant de case en case.

Afin d'étudier le comportement d'organismes vivants dans un environnement donné, notamment la toxicité d'une source d'exposition, il est connu d'utiliser des êtres vivants généralement choisis pour leur qualité de biomarqueurs, c'est-à-dire leur propension à réagir à l'environnement, notamment en présence d'un toxique. En raison de facilité d'utilisation et de leur faible encombrement, des organismes de petite taille tels que des arthropodes sont généralement utilisés. Ces organismes sont exposés à la source d'exposition, et leur évolution est ensuite analysée afin de détecter, et éventuellement de quantifier, la toxicité de l'exposition.

Une des méthodes d'analyse consiste à surveiller ces organismes vivant pendant toute la durée de l'exposition pour en étudier le comportement, et en déduire la toxicité de l'exposition. Pour ce faire, un organisme est disposé dans un récipient transparent au moins sur une face d'observation, et des images du récipient sont acquises à travers la face d'observation par un imageur disposé en face de la face d'observation.

Par exemple, la demande de brevet KR 2000 0067583 décrit un système d'étude comportementale d'organismes vivants comprenant un unique aquarium destiné à recevoir des poissons, l'unique aquarium étant transparent au moins sur une face d'observation afin de permettre l'observation des êtres vivants à partir d'un point d'observation situé à distance de la face d'observation, un imageur étant disposé au point d'observation de l'unique aquarium.

Toutefois, s'agissant d'êtres vivants, il existe un certain aléa quant à la réaction de l'organisme vivant à l'exposition toxique, voire même des pertes inévitables de ceux-ci. Il est donc nécessaire d'étudier plusieurs êtres vivants simultanément et de faire un traitement statistique des résultats pour gommer ces aléas. Il n'est cependant pas opportun généralement de disposer plusieurs êtres vivants dans le même récipient puisque les organismes peuvent alors interférer entre eux, ce qui fausse les résultats de la surveillance. Par ailleurs, il est très encombrant et coûteux de prévoir un récipient et un imageur pour chaque organisme surveillé.

### PRESENTATION DE L'INVENTION

L'invention a pour but de résoudre au moins certains des inconvénients précités, en proposant un système d'étude comportementale, notamment sous forme d'un toximètre, permettant la détection d'organismes pouvant être de très petite taille en limitant le nombre d'imageurs pour pouvoir travailler en haute résolution et/ou à haute vitesse d'acquisition à un coût raisonnable.

L'invention a également de préférence pour but de proposer un système d'étude comportementale, notamment sous forme d'un toximètre, adaptés pour permettre la surveillance simultanée de plusieurs êtres vivants exposés à une source de toxicité, en permettant l'acquisition d'images de bonne qualité sans problèmes d'analyse due à la conformation de la cage.

A cet effet, il est proposé un système d'étude comportementale d'organismes vivants, notamment toximètre, comprenant :
- au moins deux cages, chaque cage comprenant une pluralité de compartiments chacun destinés à recevoir un organisme vivant, chaque cage étant transparente au moins sur une face d'observation afin de permettre l'observation des êtres vivants à partir d'un point d'observation situé à distance de la face d'observation, le compartiment étant délimité par des séparations, les compartiments se répartissant juxtaposés les uns aux autres sur la face d'observation, les compartiments étant délimités entre eux par des séparations, une séparation entre deux compartiments adjacents présentant une paroi dans chacun desdits compartiments adjacents, la paroi d'une séparation étant inclinée par rapport à la paroi d'une autre séparation de sorte à ce que les parois des séparations d'un compartiment se rapprochent en direction de la face d'observation, lesdites séparations étant alignées selon des lignes de fuite concurrentes au point d'observation,
- un imageur disposé au point d'observation de chaque cage,
caractérisé en ce que les faces d'observation desdites cages sont sensiblement perpendiculaires entre elles.

L'homme de l'art comprendra que les caractéristiques précitées de l'invention permettent de présenter un fond toujours identique vis-à-vis du point d'observation et donc de garantir une détection et une analyse optimales, tout en garantissant une compacité du système permettant de multiplier les organismes étudiés.

Le système d'étude comportementale d'organismes vivants formant par exemple un toximètre est avantageusement complété par les caractéristiques suivantes, prises seules ou en quelconque de leurs combinaisons techniquement possibles :
- les parois d'une séparation sont inclinées par rapport aux parois d'une autre séparation de sorte à ce que les parois de ladite séparation se rapprochent des parois de ladite autre séparation en direction de la face d'observation, lesdites séparations étant alignées selon des lignes de fuite concurrentes au point d'observation;
- les parois d'une même séparation entre deux compartiments adjacents sont inclinées l'une par rapport à l'autre en direction de la face d'observation, lesdites parois étant alignées selon des lignes de fuite concurrentes au point d'observation;
- le point d'observation est situé à une distance inférieure à un mètre de la face d'observation;
- la cage comprend un circuit de circulation de fluide, par exemple d'eau, traversant les compartiments, les séparations comportant des ouvertures pour permettre la communication de fluide entre des compartiments adjacents;
- la cage comprend une pluralité de compartiments faisant face à un point d'observation, par exemple au moins 9 compartiments, et de préférence encore au moins 16 compartiments;
- le système formant par exemple toximètre comprend une cage disposée avec une face d'observation verticale et une cage disposée avec une face d'observation horizontale;
- le système formant par exemple toximètre forme un cube dont trois faces sont constituées chacune par une cage du type précité.

### PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :
- la figure 1 illustre de façon schématique une coupe d'une cage selon un mode de réalisation possible de l'invention,
- la figure 2 illustre de façon schématique un toximètre selon un mode de réalisation possible de l'invention.

### DESCRIPTION DETAILLEE

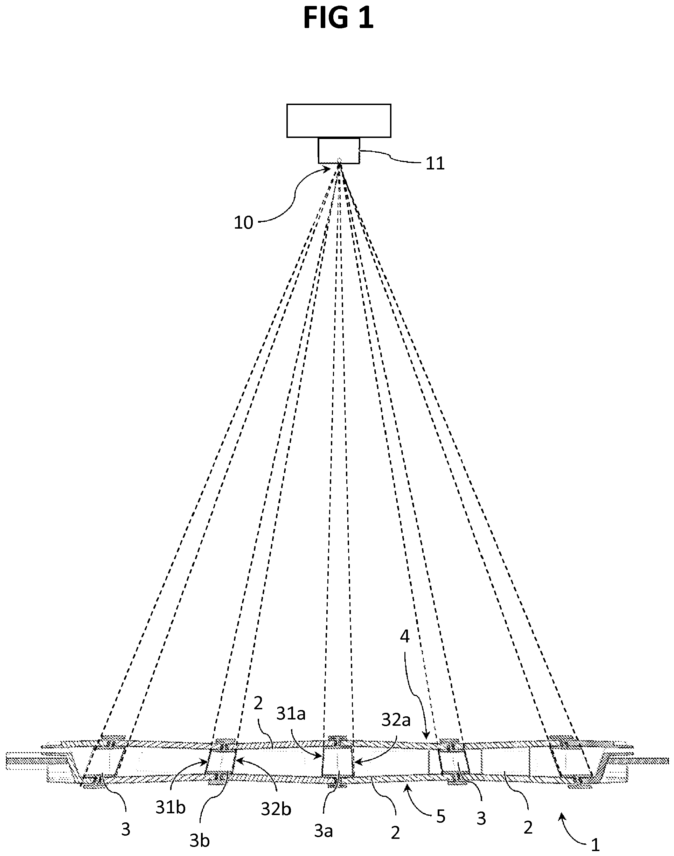

En référence à la figure 1, la cage 1 comprend une pluralité de compartiments 2 chacun destiné à recevoir un organisme vivant. Les compartiments 2 sont délimités par des séparations 3 entre lesdits compartiments, et par deux faces, dont une face d'observation 4 transparente. La face d'observation 4 permet l'observation des êtres vivants dans les compartiments 2 à partir d'un point d'observation 10 situé à distance de la face d'observation 4. La face d'observation est par exemple en polypropylène transparent. La cage 1 est particulièrement adaptée pour l'observation d'être vivants aquatiques de petite taille (mollusques, crustacés, etc.) et la description qui suit est faite dans ce contexte.

Il est bien entendu que la transparence de la face d'observation 4 signifie qu'une observation peut être effectuée à travers cette face d'observation 4. Il est donc possible que la face d'observation 4 soit opaque à certains rayonnements, tant qu'une observation reste possible à travers cette face d'observation 4. Par exemple, la face d'observation 4 peut être opaque à la lumière visible, mais permette cependant une observation par des infrarouges ou des ultra-violets, notamment au moyen d'un imageur approprié. Il est bien sûr également possible que la face d'observation 4 permette une observation à travers elle à l'œil nu d'un utilisateur, comme par exemple dans le cas où la face d'observation 4 est transparente aux longueurs d'onde visibles.

Comme indiqué précédemment chaque compartiment 2 est destiné à recevoir un organisme vivant et un organisme vivant unique. Cependant en variante, chaque compartiment 2 peut accueillir plusieurs organismes vivants.

Les compartiments 2 se répartissent juxtaposés les uns aux autres sur la face d'observation 4. Ainsi, l'intérieur de chaque compartiment 2 est visible depuis le point d'observation 10, à travers la face d'observation. L'autre face est une face de fond 5, qui est opposée à la face d'observation 4. Ainsi, un compartiment 2 est délimité par la face d'observation 4, la face de fond 5 et les séparations 3. Les séparations s'étendent entre la face d'observation 4 et la face de fond 5.

Une cage 1 comprend plusieurs compartiments 2, de préférence régulièrement distribués en face du point d'observation 10. La répartition des compartiments 2 peut faire l'objet de nombreuses configurations. Les différents compartiments 2 peuvent par exemple être répartis sous forme d'une matrice de lignes et colonnes. La cage 1 peut ainsi comprendre au moins 9 compartiments 2 (par exemple répartis sous forme d'une matrice de 3 lignes et 3 colonnes), et de préférence encore au moins 16 compartiments 2 (par exemple répartis sous forme d'une matrice de 4 lignes et 4 colonnes), régulièrement distribués en face du point d'observation 10. Par exemple, dans une cage à 9 compartiments organisés en trois rangées de trois compartiments 2, le point d'observation 10 est de préférence situé face à un compartiment 2 central. Dans une cage à 16 compartiments organisés en quatre rangées de quatre compartiments 2, le point d'observation 10 est de préférence situé face à l'intersection entre les quatre compartiments 2 centraux. Cependant dans le cadre de l'invention la matrice en lignes et colonnes des compartiments 2 n'est pas limitée à une matrice comportant un nombre de lignes égal au nombre de colonnes. L'invention englobe les matrices en lignes et colonnes des compartiments 2 dans lesquelles le nombre de lignes est différent du nombre de colonnes.

Les différents compartiments 2 peuvent être répartis selon une nappe plane ou incurvée.

Selon l'invention les différents compartiments peuvent par exemple être disposés selon une nappe plane faisant face à un point d'observation disposé en regard du centre de la nappe. Selon l'invention l'on peut également prévoir différentes nappes planes de compartiments inclinées entre elles, par exemple orthogonales deux à deux. L'on peut ainsi prévoir des nappes en regard et comportant en leur centre un point d'observation associé à la nappe placée en vis-à-vis, par exemple 6 nappes disposées selon les côtés d'un cube et comportant chacune un point d'observation associé à la nappe en vis-à-vis ou encore 6 nappes disposées selon les côtés d'un cube et comportant un point d'observation multidirectionnel à 360° disposé au centre du cube. D'une manière générale les différentes nappes peuvent être disposées selon les faces d'un polyèdre, de préférence régulier, par exemple un tétraèdre, un octaèdre, un dodécaèdre, etc ... L'on peut encore prévoir des compartiments 2 disposés selon une nappe sphérique et un point d'observation multidirectionnel à 360° disposé au centre de la sphère.

La cage 1 peut comprendre un circuit de circulation de fluide, par exemple d'eau, traversant plusieurs compartiments 2. A cet effet, les séparations 3 peuvent comporter des ouvertures pour permettre la communication de fluide, par exemple d'eau, entre des compartiments 2 adjacents, tout en empêchant un organisme vivant d'un compartiment 2 de traverser la séparation 3 pour rejoindre un autre compartiment 2 adjacent, par exemple au moyen d'une grille. Le fluide peut alors circuler d'un compartiment 2 à un autre, mais pas les êtres vivants.

Le fluide peut également être de l'air selon les organismes choisis, insectes aériens par exemple.

Les compartiments 2 peuvent également contenir des organismes en gélose ou dans un autre milieu transparent.

Chaque séparation 3 entre deux compartiments 2 adjacents présente une paroi 31, 32 dans chacun desdits compartiments adjacents 2. Les parois 31a, 32a d'une séparation 3a sont inclinées par rapport aux parois 31b, 32b d'une autre séparation 3b de sorte à ce que les parois 31a, 32a de ladite séparation 3a se rapprochent des parois 31b, 32b de ladite autre séparation 3b en direction de la face d'observation 4, et donc en direction du point d'observation 10.

Plus précisément, les séparations 3 sont alignées selon des lignes de fuite concurrentes au point d'observation 10, lorsque la cage est observée en coupe selon un plan contenant le point d'observation 10, comme sur la figure 1. Le point d'observation 10 constitue donc un point de fuite pour les séparations 3 de la cage 1. Ainsi, lorsque la cage 1 est observée depuis le point d'observation 10, par exemple au moyen d'un imageur 11 disposé au point d'observation 10, les séparations 3 ne masquent pas l'intérieur des compartiments 2 et l'intérieur de chaque compartiment 2 est alors complètement visible depuis le point d'observation 10. Un organisme vivant est alors à tout moment visible quel que soient ses déplacements dans le compartiment 2, même à proximité des séparations 3. En d'autres termes grâce aux caractéristiques de l'invention, le point d'observation voit toujours un fond identique.

Puisque les intérieurs des compartiments 2 peuvent être observés depuis un même point d'observation 10, un seul imageur 11 suffit pour surveiller l'activité des êtres vivants placés dans les compartiments 2, sans qu'il ne soit nécessaire que cet imageur 11 présente des caractéristiques particulières en termes de taille ou de largeur de champ d'acquisition. Il est également possible d'utiliser une cage 1 avec une grande face d'observation 4, et donc permettant l'observation d'un grand nombre de compartiments 2 en même temps.

Afin d'améliorer encore la visibilité de l'intérieur des compartiments 2 depuis le point d'observation 10, les parois 31, 32 d'une même séparation 3 entre deux compartiments adjacents 2 sont de préférence inclinées l'une par rapport à l'autre en direction de la face d'observation 4 et donc en direction du point d'observation 10. La séparation 3 présente donc une largeur se rétrécissant en direction de la face d'observation 4 et donc en direction du point d'observation 10. Plus précisément, les parois 31, 32 d'une même séparation 3 peuvent être alignées selon des lignes de fuite concurrentes au point d'observation 10. Cela permet de ne pas avoir à limiter la largeur des séparations 3, puisque par une inclinaison différente de chacune de ses parois 31, 32, on peut éviter tout masquage des compartiments 2 adjacents à la séparation 3.

De plus, l'alignement des séparations 3 selon des lignes de fuite concurrentes au point d'observation 10 permet une configuration dans laquelle le point d'observation 10 peut être proche de la cage 1 sans qu'il n'y ait de problème de masquage des compartiments 2 par les séparations 3. Le point d'observation 10 peut notamment être situé à une distance inférieure à 1 mètre de la face d'observation, et de préférence, le point d'observation 10 peut être situé à une distance comprise entre 15 et 60 cm de la face d'observation 4. Cela permet de réduire sensiblement l'encombrement d'un toximètre comprenant une telle cage 1 et un imageur 11 placé au point d'observation 10. L'imageur 11 est typiquement une caméra ou un appareil photographique acquérant périodiquement des images de la cage 1. L'imageur 11 permet de réaliser des observations à travers la face d'observation 4. Par conséquent, la face d'observation 4 est transparente pour l'imageur 11.

Afin de limiter encore l'encombrement du toximètre, on peut tirer parti de la distance réduite entre le point d'observation 10 et la face d'observation 4, en disposant plusieurs cages 10 dans des orientations différentes partageant un même espace entre lesdites cages 1 et leurs imageurs respectifs disposés à chacun des points d'observation 10 desdites cages 1. En particulier, le toximètre peut comprendre au moins deux cages 1 dont les faces d'observation 4 sont sensiblement perpendiculaires, par exemple avec une première cage 1 disposée avec une face d'observation 4 sensiblement verticale et une seconde cage 1 disposée avec une face d'observation 4 sensiblement horizontale.

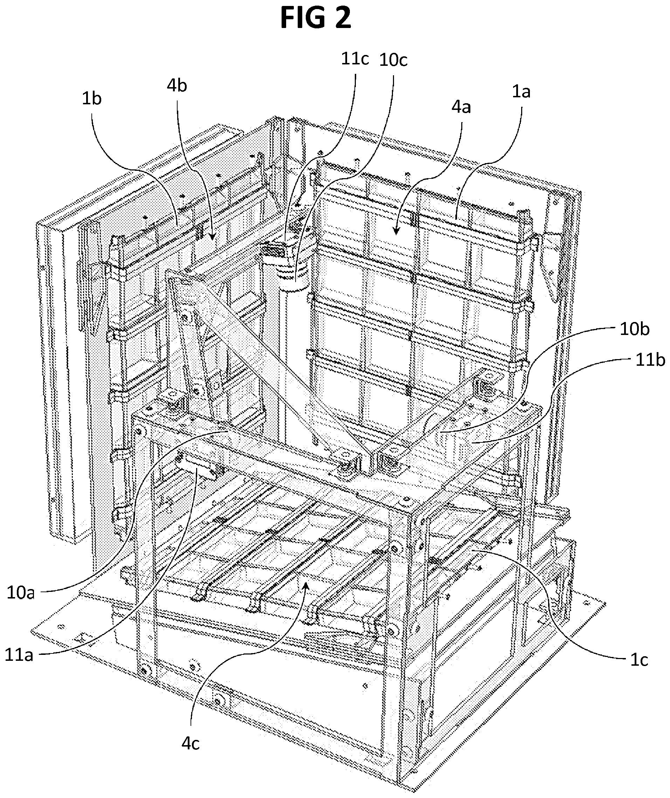

La figure 2 illustre de façon schématique un toximètre comprenant un cube dont trois faces sont constituées par une cage 1. Le toximètre comprend donc trois cages 1a, 1b, 1c. Les faces d'observation 4a, 4b, 4c respectives de ces cages sont orientées vers l'intérieur du cube formant le toximètre. Des imageurs 11a, 11b, 11c sont disposés à chaque point d'observation 10a, 10b, 10c respectif des cages 1a, 1b, 1c. Chaque point d'observation 10a, 10b, 10c est situé, par rapport à la face d'observation 4a, 4b, 4c de sa cage 1a, 1b, 1c, dans une direction d'une face ouverte du cube, c'est-à-dire une face sans cage 1. Ainsi, les imageurs 11a, 11b, 11c d'une cage 1a, 1b, 1c ne gênent pas l'observation d'une autre cage 1. De préférence, les points d'observation 10a, 10b, 10c sont situés au niveau des faces ouvertes du cube. Le toximètre comprend alors un cube dont trois faces sont formée par une cage 1, et trois faces sont formées chacune par un imageur 11 placé au point d'observation 10 de la cage 1 de la face opposée du cube.

Ainsi que visible sur la figure 2, les cages 1a, 1b, 1c sont sensiblement perpendiculaires entre elles, et donc leurs faces d'observation 4a, 4b, 4c sont également sensiblement perpendiculaires. Deux cages 1a, 1b sont disposées avec des faces d'observation 4a, 4b sensiblement verticales, tandis que la troisième cage 1c est disposée avec une face d'observation 4c sensiblement horizontale. Il est à noter toutefois que cette troisième cage 1c est de préférence légèrement inclinée par rapport à l'horizontale, afin de permettre un déplacement par gravité des matières en suspension par rapport à la face de fond 5 de la cage 1c. Toutefois, cette inclinaison reste faible et ne dépasse pas 30° par rapport à l'horizontal.

Outre les cages 1 et les imageurs 11, un toximètre peut typiquement comprendre différents éléments de fonctionnement comme par exemple des appareils de mesure (luxmètre, thermomètre, etc.) permettant de s'assurer des conditions de maintien en vie des êtres vivants, et des actionneurs tels que des pompes de circulation d'eau ou des groupes froids ou chauffage.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention défini par les revendications.

En particulier l'invention n'est pas limitée à la réalisation d'un toximètre destiné à l'étude de toxicité de composants ou à la détection de contaminants. L'invention s'applique également par exemple à la réalisation d'appareils d'étude comportementale en réaction à des stimuli variés, tels que vibrations, lumière, température, etc ...

## Revendications

1. Système d'étude comportementale d'organismes vivants, notamment toximètre, comprenant :
- au moins deux cages, chaque cage comprenant une pluralité de compartiments (2) chacun destiné à recevoir un organisme vivant, chaque cage (1) étant transparente au moins sur une face d'observation (4) afin de permettre l'observation des êtres vivants à partir d'un point d'observation (10) situé à distance de la face d'observation (4), les compartiments (2) se répartissant juxtaposés les uns aux autres sur la face d'observation (4), les compartiments (2) étant délimités entre eux par des séparations (3), une séparation (3) entre deux compartiments (2) adjacents présentant une paroi (31, 32) dans chacun desdits compartiments adjacents, la paroi (31a) d'une séparation (3a) étant inclinée par rapport à la paroi (32b) d'une autre séparation (3b) de sorte à ce que les parois (31a, 32b) des séparations (3a, 3b) d'un compartiment (2) se rapprochent en direction de la face d'observation (4), lesdites séparations (3a, 3b) étant alignées selon des lignes de fuite concurrentes au point d'observation (10),
- un imageur (11) disposé au point d'observation (10) de chaque cage,
les faces d'observation (4a, 4b, 4c) desdites cages (1a, 1b, 1c) étant sensiblement perpendiculaires entre elles.

2. Système selon la revendication précédente, dans lequel les parois (31a, 32a) d'une séparation (3a) sont inclinées par rapport aux parois (31b, 32b) d'une autre séparation (3b) de sorte à ce que les parois (31a, 32a) de ladite séparation (3a) se rapprochent des parois (31b, 32b) de ladite autre séparation (3b) en direction de la face d'observation (4), lesdites séparations (3) étant alignées selon des lignes de fuite concurrentes au point d'observation (10).

3. Système selon l'une des revendications précédentes, dans lequel les parois (31, 32) d'une même séparation (3) entre deux compartiments (2) adjacents sont inclinées l'une par rapport à l'autre en direction de la face d'observation (4), lesdites parois (31, 32) étant alignées selon des lignes de fuite concurrentes au point d'observation (10).

4. Système selon l'une quelconque des revendications précédentes, dans lequel chaque point d'observation (10) est situé à une distance inférieure à un mètre de la face d'observation (4).

5. Système selon l'une quelconque des revendications précédentes, comprenant un circuit de circulation de fluide, par exemple d'eau, traversant les compartiments (2), les séparations (3) comportant des ouvertures pour permettre la communication de fluide entre des compartiments (2) adjacents.

6. Système selon l'une des revendications précédente, comprenant plusieurs cages disposées selon des nappes planes ou incurvées, chaque nappe comprenant plusieurs compartiments (2) régulièrement distribués en face d'un point d'observation (10), de préférence sous forme d'une matrice de lignes et colonnes.

7. Système selon l'une des revendications précédentes, dans lequel une cage (1a, 1b) est disposée avec une face d'observation (4a, 4b) verticale et une cage (1c) est disposée avec une face d'observation (4c) horizontale.

8. Système selon l'une quelconque des revendications précédentes, formant un cube dont trois faces sont constituées chacune par une cage (1a, 1b, 1c).

## Patentansprüche

1. System zur Untersuchung des Verhaltens lebender Organismen, insbesondere Toximeter, umfassend:
- mindestens zwei Käfige, wobei jeder Käfig eine Vielzahl von Fächern (2) umfasst, die jeweils bestimmt sind, einen lebenden Organismus aufzunehmen, wobei jeder Käfig (1) an mindestens einer Beobachtungsseite (4) transparent ist, um die Beobachtung der Lebewesen ab einem Beobachtungspunkt (10) zu gestatten, der sich beabstandet von der Beobachtungsseite (4) befindet, wobei sich die Fächer (2) nebeneinander an der Beobachtungsseite (4) verteilen, wobei die Fächer (2) untereinander durch Separatoren (3) begrenzt sind, wobei ein Separator (3) zwischen zwei benachbarten Fächern (2) eine Wand (31, 32) in jedem der benachbarten Fächer aufweist, wobei die Wand (31a) eines Separators (3a) im Verhältnis zu der Wand (32b) eines anderen Separators (3b) geneigt ist, so dass sich die Wände (31a, 32b) der Separatoren (3a, 3b) eines Fachs (2) in Richtung der Beobachtungsseite (4) annähern, wobei die Separatoren (3a, 3b) gemäß am Beobachtungspunkt (10) zusammenlaufenden Fluchtlinien ausgerichtet sind,
- einen Bildgeber (11), der am Beobachtungspunkt (10) jedes Käfigs angeordnet ist,
wobei die Beobachtungsseiten (4a, 4b, 4c) der Käfige (1a, 1b, 1c) etwa senkrecht zueinander sind.

2. System nach vorangehendem Anspruch, wobei die Wände (31a, 32a) eines Separators (3a) im Verhältnis zu den Wänden (31b, 32b) eines anderen Separators (3b) geneigt sind, so dass sich die Wände (31a, 32a) des Separators (3a) den Wänden (31b, 32b) des anderen Separators (3b) in Richtung der Beobachtungsseite (4) annähern, wobei die Separatoren (3) gemäß am Beobachtungspunkt (10) zusammenlaufenden Fluchtlinien ausgerichtet sind.

3. System nach einem der vorangehenden Ansprüche, wobei die Wände (31, 32) desselben Separators (3) zwischen zwei benachbarten Fächern (2) zueinander in Richtung der Beobachtungsseite (4) geneigt sind, wobei die Wände (31, 32) gemäß am Beobachtungspunkt (10) zusammenlaufenden Fluchtlinien ausgerichtet sind.

4. System nach einem der vorangehenden Ansprüche, wobei sich jeder Beobachtungspunkt (10) in einem Abstand von weniger als einen Meter von der Beobachtungsseite (4) befindet.

5. System nach einem der vorangehenden Ansprüche, umfassend einen Zirkulationskreis von Fluid, beispielsweise von Wasser, der die Fächer (2) durchquert, wobei die Separatoren (3) Öffnungen aufweisen, um die Fluidkommunikation zwischen benachbarten Fächern (2) zu gestatten.

6. System nach einem der vorangehenden Ansprüche, umfassend mehrere Käfige, die gemäß ebenen oder gekrümmten Bahnen angeordnet sind, wobei jede Bahn mehrere gleichmäßig verteilte Fächer (2) gegenüber einem Beobachtungspunkt (10) umfasst, vorzugsweise in Form einer Matrix aus Zeilen und Spalten.

7. System nach einem der vorangehenden Ansprüche, wobei ein Käfig (1a, 1b) mit einer vertikalen Beobachtungsseite (4a, 4b) angeordnet ist und ein Käfig (1c) mit einer horizontalen Beobachtungsseite (4c) angeordnet ist.

8. System nach einem der vorangehenden Ansprüche, das einen Würfel bildet, von dem drei Seiten jeweils von einem Käfig (1a, 1b, 1c) gebildet sind.

## Claims

1. System for the behavioural study of living organisms, in particular a toximeter, comprising:
- at least two cages, each cage comprising a plurality of compartments (2) each intended to receive a living organism, each cage (1) being transparent on at least one observation face (4) in order to allow observation of the living beings from an observation point (10) located at a distance from the observation face (4), the compartments (2) being distributed juxtaposed to one another on the observation face (4), the compartments (2) being delimited from one another by partitions (3), a partition (3) between two adjacent compartments (2) having a wall (31, 32) in each of said adjacent compartments, the wall (31a) of one partition (3a) being inclined relative to the wall (32b) of another partition (3b) so that the walls (31a, 32b) of the partitions (3a, 3b) of a compartment (2) approach each other in the direction of the viewing face (4), said partitions (3a, 3b) being aligned along concurrent vanishing lines at the viewing point (10),
- an imager (11) located at the observation point (10) of each cage,
the observation faces (4a, 4b, 4c) of said cages (1a, 1b, 1c) being substantially perpendicular to one another.

2. System according to the preceding claim, wherein the walls (31a, 32a) of one partition (3a) are inclined relative to the walls (31b, 32b) of another partition (3b) so that the walls (31a, 32a) of said partition (3a) approach the walls (31b, 32b) of said other partition (3b) towards the observation face (4), said partitions (3) being aligned along concurrent vanishing lines at the observation point (10).

3. System according to one of the preceding claims, wherein the walls (31, 32) of the same partition (3) between two adjacent compartments (2) are inclined with respect to each other in the direction of the observation face (4), said walls (31, 32) being aligned along concurrent vanishing lines at the observation point (10).

4. Ssystem according to any of the preceding claims, wherein each observation point (10) is located at a distance of less than one meter from the observation face (4).

5. System according to any one of the preceding claims, comprising a circuit for circulating fluid, for example water, through the compartments (2), the separations (3) having openings to allow fluid communication between adjacent compartments (2).

6. System according to one of the preceding claims, comprising a plurality of cages arranged in flat or curved sheets, each sheet comprising a plurality of compartments (2) regularly distributed opposite an observation point (10), preferably in the form of a matrix of rows and columns.

7. System according to one of the preceding claims, wherein a cage (1a, 1b) is arranged with a vertical observation face (4a, 4b) and a cage (1c) is arranged with a horizontal observation face (4c).

8. System according to any of the preceding claims, forming a cube, three faces of which are each constituted by a cage (1a, 1b, 1c).
